# EUROPÄISCHE PATENTSCHRIFT

(11) **EP 1 767 752 B1**
(45) Veröffentlichungstag und Bekanntmachung des Hinweises auf die Patenterteilung: **07.01.2009**
(21) Anmeldenummer: 06120630.6
(22) Anmeldetag: 14.09.2006
(51) Int. Cl.: F01N 3/022, F01N 3/28

(54) **Abgasbehandlungseinrichtung**
Exhaust gas processing device
Dispositif de traitement des gaz d'échappement

(30) Priorität: 27.09.2005 DE 102005046317
(43) Veröffentlichungstag der Anmeldung: 28.03.2007
(73) Patentinhaber: J. Eberspächer GmbH & Co. KG, 73730 Esslingen (DE)
(72) Erfinder: Wirth, Georg, 73230, Kirchheim/Teck (DE); Grupp, Johannes, 73072, Donzdorf (DE)
(74) Vertreter: Bongen, Renaud & Partner

(56) Entgegenhaltungen:
- JP-A- 4 301 130
- US-A- 4 419 108

## Beschreibung

Die vorliegende Erfindung betrifft eine Abgasbehandlungseinrichtung für eine Abgasanlage einer Brennkraftmaschine, insbesondere in einem Kraftfahrzeug, mit den Merkmalen des Oberbegriffs des Anspruchs 1.

Eine Abgasbehandlungseinrichtung, wie z.B. ein Partikelfilter oder ein Katalysator, umfasst üblicherweise ein Gehäuse, in dem zumindest ein Keramikkörper zur Abgasbehandlung angeordnet ist. Dieser Keramikkörper ist je nach Art der Abgasbehandlungseinrichtung als Partikelfilterelement oder als Katalysatorträger ausgestaltet. Der Keramikkörper besitzt einen Durchströmungswiderstand, wodurch er im Betrieb der Brennkraftmaschine Axialkräften in Richtung der Abgasströmung ausgesetzt ist. Insbesondere bei einem als Partikelfilterelement ausgestalteten Keramikkörper können diese Axialkräfte mit zunehmender Beladung des Partikelfilterelements beträchtlich ansteigen.

Ein direkter Kontakt zwischen dem Keramikkörper und dem üblicherweise aus Blech bestehenden Gehäuse würde zu einer Zerstörung des Keramikkörpers und/oder des Gehäuses führen.

Um eine Kontaktierung des Keramikkörpers mit dem Gehäuse in axialer Richtung zu vermeiden, ist es grundsätzlich möglich, den Keramikkörper an dessen Auslassseite mit Hilfe von axial wirkenden Abstützelementen am Gehäuse abzustützen. Diese Abstützelemente können beispielsweise elastisch nachgiebige Drahtgestrickkissen aufweisen oder durch solche gebildet sein. Die Abstützelemente sind z.B. ringförmig ausgestaltet und radial möglichst weit außen angeordnet, um den Keramikkörper am Gehäuse axial abzustützen. Die Montage derartiger Abstützelemente ist vergleichsweise kostenintensiv.

Aus der US 4,419,108 ist eine Abgasbehandlungseinrichtung für eine Abgasanlage einer Brennkraftmaschine bekannt, die ein Gehäuse aufweist, in dem wenigstens ein Keramikkörper zur Abgasbehandlung angeordnet ist. Der Keramikkörper weist zumindest an seiner Auslassseite eine bearbeitete Kontaktzone auf, während das Gehäuse an seiner Auslassseite eine dem Keramikkörper zugewandte Anlagezone aufweist. Kontaktzone und Anlagezone sind dabei so aufeinander abgestimmt, dass der Keramikkörper im Falle einer auslassseitigen axialen Kontaktierung zwischen Keramikkörper und Gehäuse über die Kontaktzone und die Anlagezone in Umfangsrichtung geschlossen und flächig am Gehäuse direkt und axial anliegt. Dabei sind bei der bekannten Abgasbehandlungseinrichtung die Kontaktzone und die Anlagezone jeweils geradlinig und gegenüber einer senkrecht zur Längsrichtung verlaufenden Längsebene gleichförmig geneigt profiliert, was bei einer zentralen ausgerichteten Kontaktierung zu einer flächigen Abstützung führt.

Aus der JP 04-301 130 A ist es bekannt, den Keramikkörper mit einer Kontaktzone auszustatten, deren Profil geradlinig und gegenüber einer senkrecht zur Längsrichtung verlaufenden Ebene geneigt ist.

Die vorliegende Erfindung beschäftigt sich mit dem Problem, für eine Abgasbehandlungseinrichtung der eingangs genannten Art eine verbesserte Ausführungsform anzugeben, die insbesondere einen vergleichsweise preiswerten Aufbau aufweist, wobei gleichzeitig die Gefahr einer Beschädigung des Keramikkörpers und/oder des Gehäuses durch axiale Kontaktierung reduziert ist, auch wenn Gehäuse und Keramikkörpeer bezüglich ihrer Längsmittelachsen zueinander geneigt sind.

Dieses Problem wird erfindungsgemäß durch den Gegenstand des unabhängigen Anspruchs gelöst. Vorteilhafte Ausführungsformen sind Gegenstand der abhängigen Ansprüche.

Hierzu schlägt die Erfindung vor, die Kontaktzone und die Anlagezone im Axialschnitt zu profilieren, derart, dass das eine Profil konkav oder konvex gekrümmt ist, während das andere Profil entweder ebenfalls konkav oder konvex gekrümmt ist oder geradlinig und gegenüber einer senkrecht zur Längsrichtung verlaufenden Ebene geneigt ist. Hierdurch wird erreicht, dass im Kontaktfall stets ein gekrümmtes Profil entweder auf ein gerades oder geneigtes oder ebenfalls auf ein gekrümmtes Profil trifft. Durch die vorgeschlagene Paarung der profilierten Zonen ergibt sich auch für voneinander abweichende axialen Ausrichtungen zwischen Keramikkörper und Gehäuse eine Kontaktierung entlang der Umfangsrichtung, die einerseits eine verbesserte Kraftverteilung und somit eine reduzierte Flächenpressung bewirkt und die andererseits eine gewisse Ausrichtung zwischen Gehäuse und Keramikkörper bewirkt. Die Kraftspitzen können somit im Falle einer Kontaktierung reduziert werden, was die Gefahr einer Beschädigung des Keramikkörpers im Kontaktfall reduziert.

Die Erfindung beruht hierbei auf dem allgemeinen Gedanken, den Keramikkörper auslassseitig mit einer Kontaktzone und das Gehäuse mit einer der Kontaktzone gegenüberliegenden Anlagezone auszustatten, wobei Kontaktzone und Anlagezone so aufeinander abgestimmt sind, dass sich für den Fall, dass es zu einer auslassseitigen axialen Kontaktierung zwischen Keramikkörper und Gehäuse kommt, eine in Umfangsrichtung geschlossene oder verteilte, linienförmige oder flächige, direkte und axiale Anlage oder Berührung zwischen Keramikkörper und Gehäuse ausbildet. Eine derartige linienförmige oder flächige Kontaktierung führt zu einer vergleichmäßigten umfangsmäßigen Kraftverteilung zwischen Keramikkörper und Gehäuse, was mit einer signifikanten Reduzierung von Kraftspitzen einhergeht. Trotz direktem Kontakt zwischen dem Keramikkörper und dem Gehäuse führt dieser aufgrund der gleichmäßig verteilten und hinsichtlich ihrer Spitzen reduzierten Kräfte zu keiner oder nur zu einer unwesentlichen Beschädigung des Keramikkörpers bzw. des Gehäuses. Dabei kommt die erfindungsgemäße Abgasbehandlungseinrichtung ohne auslassseitige axiale Abstützelemente zwischen Keramikkörper und Gehäuse aus. Hierdurch lassen sich die Herstellungskosten reduzieren.

Dabei ist es grundsätzlich möglich, die Anlage oder Berührung umfangsmäßig verteilt auszubilden, also über mehrere, in Umfangsrichtung beabstandete, segmentartige Kontakte. Bevorzugt ist jedoch eine in Umfangsrichtung geschlossene, also kreisförmige oder ringförmige Anlage oder Berührung.

Die Erfindung beruht außerdem auf der Erkenntnis, dass für die Mehrzahl der im Einsatz der Abgasbehandlungseinrichtung auftretenden Zustände eine mit Hilfe einer Lagermatte, die den Keramikkörper umfangsmäßig umhüllt, erzielbare Lagefixierung des Keramikkörpers im Gehäuse völlig ausreichend ist. Nur in seltenen Fällen, in denen der Keramikkörper einen extrem hohen Durchströmungswiderstand aufweist, die Brennkraftmaschine einen hohen Abgasmassenstrom erzeugt und gleichzeitig entsprechende Erschütterungen des Fahrzeugs den Keramikkörper relativ zum Gehäuse beschleunigen, kann sich der Keramikkörper im Gehäuse stromab verstellen, wenn die Fixierfunktion der Lagermatte durch Alterungserscheinungen entsprechend reduziert ist. Hierbei handelt es sich in Relation zur Lebensdauer der Abgasanlage bzw. der Brennkraftmaschine bzw. des Fahrzeugs eher um singuläre Ereignisse, die nicht oder nur sehr selten eintreten. Dementsprechend kann eine direkte Kontaktierung zwischen Keramikkörper und Gehäuse aufgrund der reduzierten wirksamen Axialkräfte in Kauf genommen werden.

Vorzugsweise sind die Kontaktzone und die Anlagezone möglichst weit radial außen angeordnet, um im Falle einer Kontaktierung die Durchströmung des Keramikkörpers nicht oder nur unwesentlich zu beeinträchtigen.

Bei einer bevorzugten Ausführungsform ist der Keramikkörper im Gehäuse im Neuzustand der Abgasbehandlungseinrichtung so angeordnet, dass die Kontaktzone von der Anlagezone axial beabstandet ist. Auf die Weise ist gewährleistet, dass keine axiale Kontaktierung zwischen Keramikkörper und Gehäuse stattfindet, solange die Lagefixierung, insbesondere mit Hilfe einer Lagermatte, des Keramikkörpers im Gehäuse hinreichend Haltekräfte erzeugt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen stark vereinfachten halben Längsschnitt durch eine von den Ansprüchen nicht umfasste Abgasbehandlungseinrichtung,
- Fig. 2a bis 2d: stark vereinfachte axiale Ansichten auf eine Anlagezone entsprechend einem Pfeil II in Fig. 1 bei unterschiedlichen, von den Ansprüchen nicht umfassten Ausführungsformen,
- Fig. 3: eine vergrößerte Ansicht auf ein Detail III in Fig. 1,
- Fig. 4: eine Ansicht wie in Fig. 2, jedoch bei einer anderen, von den Ansprüchen nicht umfassten Ausführungsform,
- Fig. 5 und 6: Ansichten wie in Fig. 2, jedoch bei erfindungsgemäßen Ausführungsformen,
- Fig. 7: eine Ansicht wie in Fig. 1, jedoch bei einer anderen erfindungsgemäßen Ausführungsform,
- Fig. 8 bis 11: Ansichten wie in Fig. 2, jedoch bei weiteren erfindungsgemäßen Ausführungsformen,
- Fig. 12 bis 14: jeweils stark vereinfachte, vergrößerte Längsschnitte durch einen Keramikkörper im Bereich einer Kontaktzone a) vor und b) nach dem Bearbeiten des Keramikkörpers.

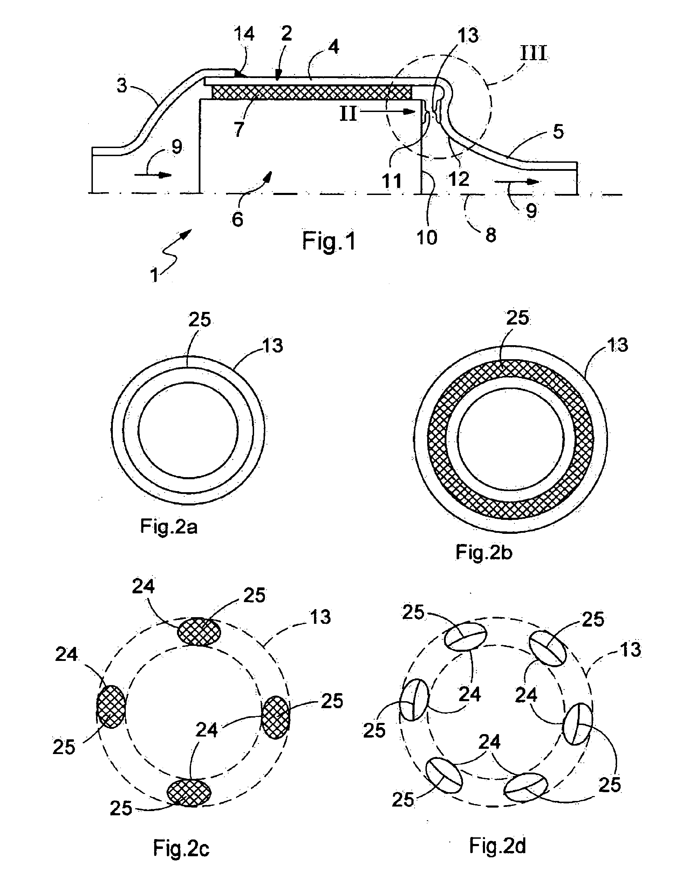

Entsprechend Fig. 1 umfasst eine Abgasbehandlungseinrichtung 1 ein Gehäuse 2, das einen Einlasstrichter 3, einen Mantel 4 und einen Auslasstrichter 5 aufweist. Das Gehäuse 2 und seine Bestandteile bestehen üblicherweise aus einem Metallblech, insbesondere Stahlblech oder Edelstahlblech. Im Gehäuse 2 ist zumindest ein Keramikkörper 6 angeordnet, der zur Abgasbehandlung dient. Die Abgasbehandlungseinrichtung 1 ist zum Einbau in eine Abgasanlage einer Brennkraftmaschine vorgesehen, die ihrerseits vorzugsweise in ein Kraftfahrzeug eingebaut ist.

Der Keramikkörper 6 ist umfangsmäßig, also radial außen von einer Lagermatte 7 umhüllt, die zur Lagefixierung des Keramikkörpers 6 im Mantel 4 des Gehäuses 2 dient. Die Lagermatte 7 besteht beispielsweise aus Keramikfasern und ist üblicherweise durch die Montage radial vorgespannt. Hierdurch ergibt sich zumindest im Neuzustand der Abgasbehandlungseinrichtung 1 für den Keramikkörper 6 eine hinreichende Lagefixierung in radialer und in axialer Richtung im Gehäuse 2. Die Abgasbehandlungseinrichtung 1 bzw. das Gehäuse 2 und der Keramikkörper 6 können bezüglich einer Längsmittelachse 8 einen rotationssymmetrischen Querschnitt aufweisen. Grundsätzlich sind jedoch auch andere Querschnitte, z.B. elliptische oder ovale Querschnitte, möglich.

Je nach Ausgestaltung der Abgasbehandlungseinrichtung 1 kann es sich beim Keramikkörper 6 beispielsweise um ein Partikelfilterelement handeln, das beispielsweise bei einer Abgasanlage für einen Dieselmotor oder für einen Ottomotor zur Abgasreinigung zum Einsatz kommt. Ebenfalls kann es sich beim Keramikkörper 6 grundsätzlich auch um einen Katalysatorträger handeln, also um ein katalytisch beschichtetes keramisches Substrat. Der Keramikkörper 6 kann als Monolith, also einteilig ausgestaltet sein. Ebenso ist es grundsätzlich möglich, den Keramikkörper aus mehreren Monolithkörpern zusammenzubauen. Bei einem mehrteiligen Keramikkörper 6 können die einzelnen Monolithkörper in axialer Richtung aufeinander folgen und aneinander befestigt sein. Ebenso ist es möglich, mehrere, bezüglich der Längsrichtung parallel zueinander angeordnete Monolithkörper zum Keramikkörper 6 zusammenzubauen. Aufgrund seiner Herstellung als Extrudierteil besitzt der Keramikkörper 6 vorzugsweise in der Längsrichtung ein konstantes Querschnittsprofil. Die Durchströmungsrichtung der Abgasbehandlungseinrichtung 1, also die Strömungsrichtung von Abgasen, die im Betrieb die Abgasbehandlungseinrichtung 1 durchströmen, ist durch Pfeile 9 angedeutet.

Der Keramikkörper 1 ist zumindest an seiner Auslassseite 10, die bezüglich der Strömungsrichtung 9 stromab angeordnet ist, mit einer Kontaktzone 11 ausgestattet, die sich dadurch kennzeichnet, dass sie bearbeitet ist, während die übrige Auslassseite 10 im wesentlichen unbearbeitet ist. Unter "Bearbeitung" wird im vorliegenden Zusammenhang eine Bearbeitung mit Materialabtrag verstanden, also insbesondere eine schleifende oder fräsende Bearbeitung. Des weiteren ist das Gehäuse 2 ebenfalls an seiner Auslassseite 12, also stromab des Keramikkörpers 6 mit einer Anlagezone 13 ausgestattet, die dem Keramikkörper 6 zugewandt ist. Diese Anlagezone 13 und die zuvor genannte Kontaktzone 11 sind nun so ausgestaltet und so aufeinander abgestimmt, dass der Keramikkörper 6 für den Fall, dass auslassseitig eine axiale Kontaktierung zwischen dem Keramikkörper 6 und dem Gehäuse 2 auftritt, in Umfangsrichtung verteilt oder geschlossen, linienförmig oder flächig am Gehäuse 2 direkt und axial zur Anlage kommen kann. Dabei liegt der Keramikkörper 6 dann ausschließlich mit seiner Kontaktzone 11 axial am Gehäuse 2 und zwar ausschließlich in dessen Anlagezone 13 an.

Die Fig. 2a bis 2d zeigen exemplarisch verschiedene Möglichkeiten axialer Berührungen oder Anlagen zwischen dem Keramikkörper 6 und dem Gehäuse 2, jeweils in einer stark vereinfachten Darstellung, und zwar in einer axialen Blickrichtung entsprechend dem Pfeil II in Fig. 1. Die Fig. 2a bis 2d zeigen dabei jeweils nur die Anlagezone 13, die sich in Umfangsrichtung erstreckt und dabei exemplarisch kreisförmig bzw. kreisringförmig ausgestaltet ist. Bei den Beispielen der Fig. 2a und 2b ist die Anlagezone 13 in Umfangsrichtung geschlossen ausgebildet. Fig. 2a zeigt ein Beispiel für eine linienförmige Berührung 25 zwischen der Kontaktzone 11 und der Anlagezone 13. Diese Berührung 25 ist dabei ebenfalls in Umfangsrichtung geschlossen und beispielsweise kreisförmig. Bei der Ausführungsform gemäß Fig. 2b ist die Berührung 25 flächig ausgestaltet, und zwar in Umfangsrichtung geschlossen, z.B. als Kreisring.

Bei den Ausführungsform der Fig. 2c und 2d ist die Anlagezone 13 durch mehrere, in Umfangsrichtung verteilt angeordnete und in Umfangsrichtung voneinander beabstandete, separate Anlagebereiche 24 gebildet. Im Kontaktfall ergibt sich dabei keine in Umfangsrichtung geschlossene, sondern eine in Umfangsrichtung verteilte Berührung oder Anlage 25 zwischen der Kontaktzone 11 und der Anlagezone 13. Fig. 2c zeigt dabei ein Beispiel für eine in Umfangsrichtung verteilte flächige Berührung 25, während Fig. 2d ein Beispiel für eine in Umfangsrichtung verteilte, linienförmige Berührung 25 wiedergibt. Derartige diskrete Anlagebereiche 24 lassen sich am Gehäuse 2 bzw. am Auslasstrichter 5 vergleichsweise einfach herstellen und verhindern im Kontaktfall eine vollständige Abdichtung zwischen Keramikkörper 6 und Gehäuse 2 im Bereich der Anlagezone 13.

Entsprechend Fig. 1 ist im Neuzustand der Abgasbehandlungseinrichtung 1 der Keramikkörper 6 im Gehäuse 2 so positioniert, dass die Kontaktzone 11 in axialer Richtung von der Anlagezone 13 beabstandet ist. Insbesondere im Neuzustand kann nämlich die Lagermatte 7 den Keramikkörper 6 mit hinreichender Haltekraft im Gehäuse 2 positionieren oder lagefixieren. Erst im Betrieb der Abgasbehandlungseinrichtung 1 führen die hohen Betriebstemperaturen und die Alterung der Lagermatte 7, die mit Binderverlusten und Faserbruch einhergehen kann, zu einer Reduzierung der Montagevorspannung, wodurch die Lagermatte 7 allmählich ihre Haltekraft zur Lagefixierung des Keramikkörpers 6 im Gehäuse 2 verliert. Bei gealterter Lagermatte 7 kann es bei einer entsprechenden Beschleunigung des Keramikkörpers 6 relativ zum Gehäuse 2 in Verbindung mit einem relativ großen Abgasmassenstrom sowie einem relativ hohen Durchströmungswiderstand des Keramikkörpers 6, der sich bei einem hohen Beladungsgrad des als Partikelfilterelement ausgestalteten Keramikkörpers 6 einstellt, dazu kommen, dass die axiale Haltekraft der Lagermatte 7 von den am Keramikkörper 6 angreifenden, in Strömungsrichtung wirkenden Axialkräften überwunden wird, wodurch sich der Keramikkörper 6 im Gehäuse 2 stromab verschiebt. In diesem Fall kann es zu der obengenannten axialen Kontaktierung zwischen Keramikkörper 6 und Gehäuse 2 kommen, bei welcher die Kontaktzone 11 an der Anlagezone 13 in Umfangsrichtung geschlossen, linienförmig oder flächig anliegt. Eine linienförmige Kontaktierung führt ebenso wie eine flächige Kontaktierung zu einer umfangsmäßig gleichmäßigen Kraftübertragung zwischen Keramikkörper 6 und Gehäuse 2, so dass im wesentlichen keine kritischen Kraftspitzen auftreten. Die Gefahr einer Beschädigung des Keramikkörpers 6 und/oder des Gehäuses 2 durch eine derartige Kontaktierung ist somit reduziert.

Vorzugsweise ist die Kontaktzone 11 in Umfangsrichtung geschlossen, also ringförmig ausgebildet. Ebenso kann die Anlagezone 13 ringförmig, also in Umfangsrichtung geschlossen ausgestaltet sein. Des weiteren ist bei den hier gezeigten Ausführungsformen die Kontaktzone 11 innerhalb der Auslassseite 10 jeweils nur in einem radial außen liegenden Bereich oder Randbereich der Auslassseite 10 ausgebildet. Dementsprechend ist auch die Anlagezone 13 vorzugsweise ausschließlich in einem radial außen liegenden Bereich der Auslassseite 12 des Gehäuses 2, und zwar vorzugsweise am Auslasstrichter 5 ausgebildet.

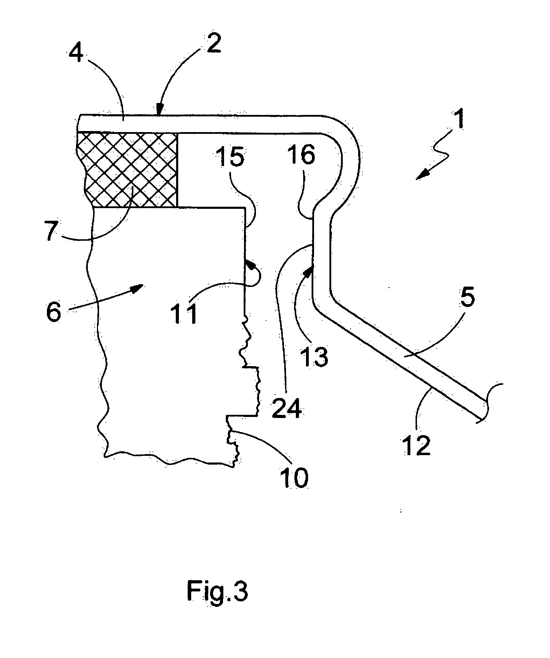

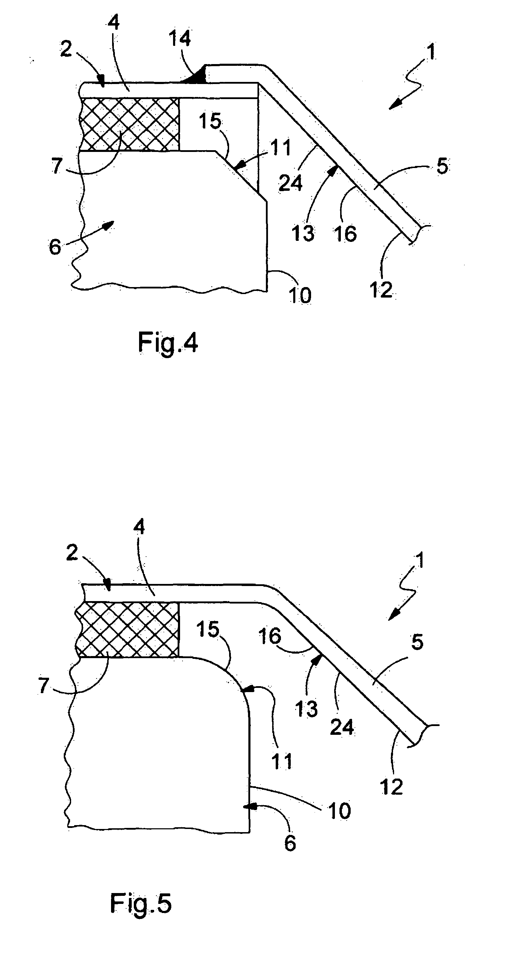

Beim Gehäuse 2 können die beiden Trichter 3, 5 integral, also mit dem Mantel 4 aus einem Stück hergestellt sein. Ebenso ist es grundsätzlich möglich, dass wenigstens einer der Trichter 3, 5 an das übrige Gehäuse 2 angebaut ist, also ein separates Bauteil darstellt, das auf geeignete Weise, beispielsweise mittels einer Schweißverbindung, mit dem übrigen Gehäuse 2 fest verbunden ist. Beispielsweise ist in Fig. 1 der Einlasstrichter 3 ein separates Bauteil, während der Auslasstrichter 5 integriert ist. Auch bei den Varianten der Fig. 3 und 5 bis 9 ist der Auslasstrichter 5 integraler Bestandteil des Gehäuses 2. Im Unterschied dazu bildet der Auslasstrichter 5 bei den Ausführungsformen der Fig. 4, 10 und 11 ein separates Bauteil, das mittels Schweißverbindungen mit dem Mantel 4 fest verbunden ist. Die Schweißverbindungen sind in den Figuren mit 14 bezeichnet.

Bei den hier gezeigten Ausführungsformen besitzt die Kontaktzone 11 im Axialschnitt ein Profil 15, das in der Umfangsrichtung konstant ist. Ebenso ist auch die Anlagezone 13 vorzugsweise mit einem in Umfangsrichtung konstanten Profil 16 ausgestattet. Auch die Anlagebereiche 24 besitzen jeweils ein solches Anlagezonenprofil 16, das in Umfangsrichtung konstant ist. Die nachfolgenden Beispiele gelten sowohl für umfangsmäßig geschlossene Anlagezonen 13 als auch für Anlagezonen 13, die aus mehreren umfangsmäßig verteilten Anlagebereichen 24 aufgebaut sind.

Bei der in Fig. 3 gezeigten Ausführungsform sind das Kontaktzonenprofil 15 und das Anlagezonenprofil 16 jeweils geradlinig ausgestaltet, wobei sich die beiden Profile 15, 16 parallel zueinander und hier insbesondere senkrecht zur Längsachse des Keramikkörpers 6 erstrecken. Die Kontaktzone 11 und die Anlagezone 13 liegen dadurch jeweils in zueinander parallelen Ebenen. Im Kontaktfall kommt dabei die Kontaktzone 11 flächig an der Anlagezone 13 zur Anlage.

Fig. 3 zeigt deutlich und mit übertriebenem Maßstab, dass sich die Kontaktzone 11 von der übrigen Auslassseite 10 des Keramikköpers 6 durch ihre Bearbeitung unterscheidet. Während die Auslassseite 10 im unbearbeiteten Zustand ausgeprägte Unebenheiten und Rauhigkeiten aufweist, sind diese in der bearbeiteten Kontaktzone 11 entfernt. Dabei ist es grundsätzlich möglich, den Keramikkörper 6 im ungebrannten, sogenannten "grünen" Zustand oder im gebrannten oder fertigen Zustand zu bearbeiten.

Eine ungleichmäßige Auslassseite 10 ergibt sich für den Keramikkörper 6 auch dann, wenn dieser aus mehreren, parallel zur Längsachse verlaufenden Monolithkörpern zusammengebaut ist, die aufgrund der Montage an der Auslassseite 10 nicht bündig zueinander abschließen.

Auch bei der in Fig. 4 gezeigten Ausführungsform erstrecken sich die beiden Profile 15, 16 parallel zueinander, sind jedoch gegenüber einer senkrecht zur Längsrichtung des Keramikkörpers 6 verlaufenden Ebene geneigt. Auch bei dieser Ausführungsform lässt sich im Kontaktfall eine flächige Anlage der beiden Zonen 11, 13 aneinander realisieren. Die Kontaktzone 11 und die Anlagezone 13 liegen hier im Mantel eines gedachten Rotationskörpers.

Bei der in Fig. 5 gezeigten Ausführungsform ist die Kontaktzone 11 mit einem konvex gekrümmten Profil 15 versehen. Im Unterschied dazu ist das Profil 16 der Anlagezone 13 wieder geradlinig und erstreckt sich zu einer senkrecht zur Längsachse des Keramikkörpers 6 verlaufenden Ebene geneigt. Im Kontaktfall führt diese Konstellation zu einer linienförmigen Anlage der Kontaktzone 11 an der Anlagezone 13.

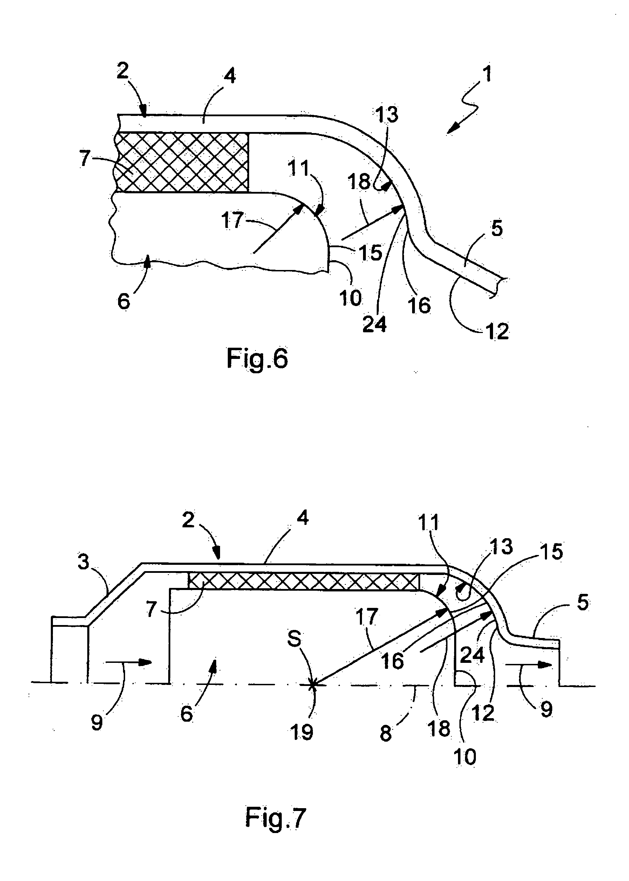

Entsprechend Fig. 6 kann bei einer anderen Ausführungsform die Kontaktzone 11 wieder ein konvex gekrümmtes Kontaktzonenprofil 15 aufweisen. Bei dieser Ausführungsform ist außerdem das Anlagezonenprofil 16 der Anlagezone 13 konkav gekrümmt.

Grundsätzlich können die gekrümmten Profile 15 und/oder 16 eine beliebige Krümmung besitzen. Bevorzugt werden jedoch Ausführungsformen, bei denen das Kontaktzonenprofil 15 und/oder das Anlagezonenprofil 16 kreisbogenförmig gekrümmt ist/sind, also jeweils ein Kreisbogensegment bildet. Diese Kreisbogensegmente sind in der jeweiligen Figur durch Radiuspfeile charakterisiert.

Solange bei der in Fig. 6 gezeigten Ausführungsform ein Radius 17 des Kontaktzonenprofils 15 kleiner ist als ein Radius 18 des Anlagezonenprofils 16, kommt es im Kontaktfall zu einer linienförmigen Berührung zwischen den beiden Zonen 11, 13. Sind die beiden Radien 17, 18 gleich groß, führt der Kontaktfall zu einer flächigen Anlage der beiden Zonen 11, 13 aneinander. Ist jedoch der Radius 17 des Kontaktzonenprofils 15 größer als der Radius 18 des Anlagezonenprofils 16, lassen sich für den Kontaktfall eine oder sogar zwei linienförmige Berührungen zwischen den beiden Zonen 11, 13 realisieren. Zumindest für die flächige Berührung im Kontaktfall ist dabei wichtig, dass die beiden Profile 15, 16 beim flächigen Kontakt konzentrisch zueinander angeordnet sind.

Fig. 7 zeigt eine bevorzugte Ausführungsform, bei welcher der Radius 17 der Kontaktzonenkontur 15 einen Mittelpunkt 19 aufweist, der auf der Längsmittelachse 8 des Keramikkörpers 6 liegt. Vorzugsweise liegt dieser Mittelpunkt 19 - wie hier - im Schwerpunkt S des Keramikkörpers 6.

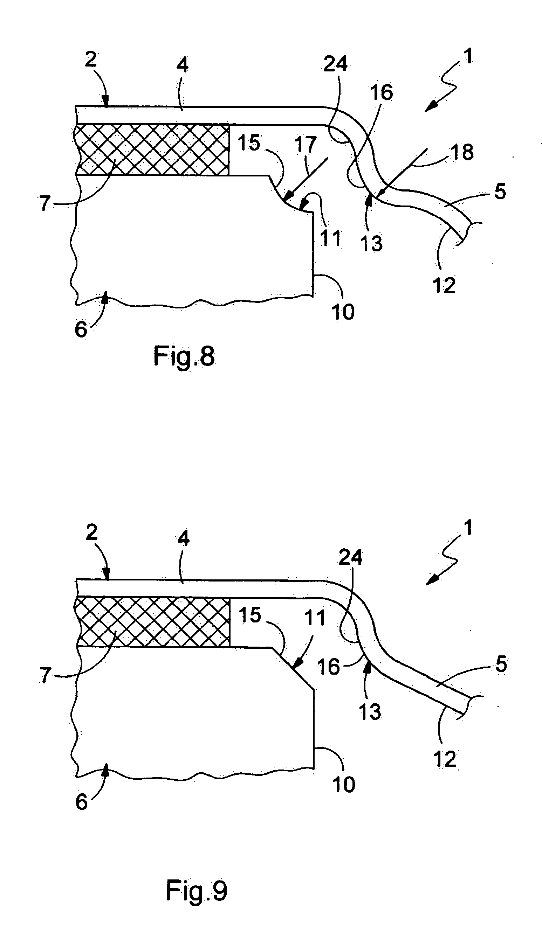

Bei der in Fig. 8 gezeigten Ausführungsform ist das Kontaktzonenprofil 15 der Kontaktzone 11 konkav gekrümmt, wobei es beispielsweise ein Kreisbogensegment mit dem Radius 17 bilden kann. Auch hier ist die Anlagezone 13 im wesentlichen komplementär geformt und besitzt ein Anlagezonenprofil 16, das konvex gekrümmt ist, und zwar insbesondere kreisbogenförmig mit dem Radius 18. Durch entsprechende Abstimmung der beiden Radien 17, 18 lassen sich für den Kontaktfall eine flächige Berührung oder eine Linienberührung zwischen den Zonen 11, 13 realisieren.

Fig. 9 zeigt eine Ausführungsform, bei welcher die Kontaktzone 11 wieder ein geradliniges Kontaktzonenprofil 15 besitzt, das gegenüber einer senkrecht zur Längsachse des Keramikkörpers 6 verlaufenden Ebene geneigt ist. Im Unterschied dazu ist bei dieser Ausführungsform das Anlagezonenprofil 16 konvex gekrümmt. Im Kontaktfall führt diese Konstellation zu einer linienförmigen Berührung zwischen den beiden Zonen 11, 13.

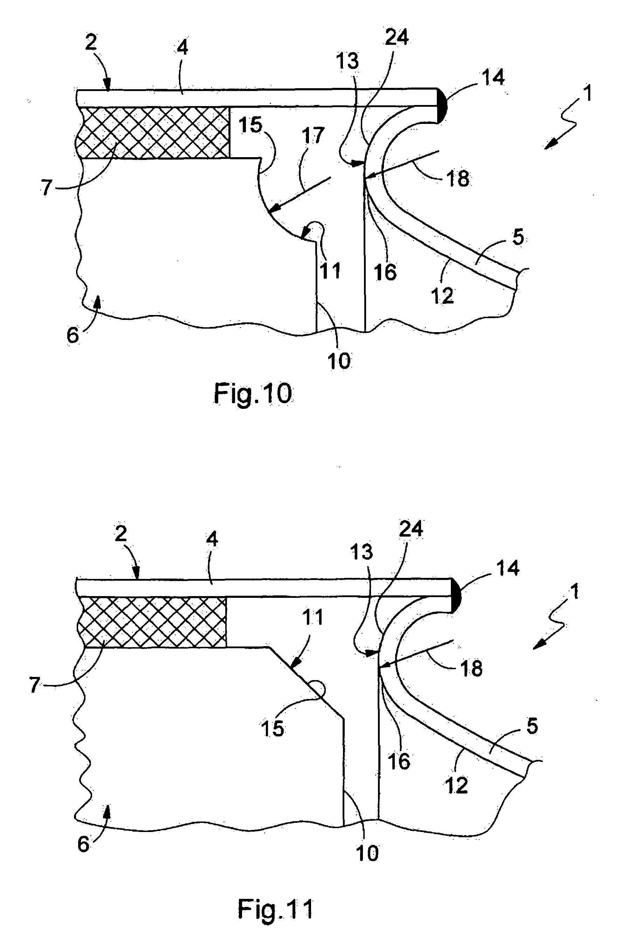

Fig. 10 zeigt eine Ausführungsform, die hinsichtlich der Konturgebung der Kontaktzone 11 und der Anlagezone 13 der in Fig. 7 gezeigten Ausführungsform entspricht. Allerdings ist bei der in Fig. 9 gezeigten Ausführungsform der Auslasstrichter 5 ein separates Bauteil, der an den Mantel 4 angebaut ist, beispielsweise mittels einer Schweißnaht 14. Durch Abstimmung der beiden Radien 17, 18 lassen sich auch hier für den Kontaktfall linienförmige oder flächige Berührungen zwischen den Zonen 11, 13 realisieren.

Die in Fig. 11 gezeigte Ausführungsform entspricht hinsichtlich der Ausgestaltung der Zonen 11, 13 der in Fig. 9 gezeigten Ausführungsform, die einen linienförmigen Kontakt ermöglicht. Allerdings ist bei der in Fig. 11 gezeigten Ausführungsform der Auslasstrichter 5 als separates Bauteil ausgeführt, der auf geeignete Weise am Mantel 4 des Gehäuses 2 befestigt ist, beispielsweise über eine Schweißnaht 14.

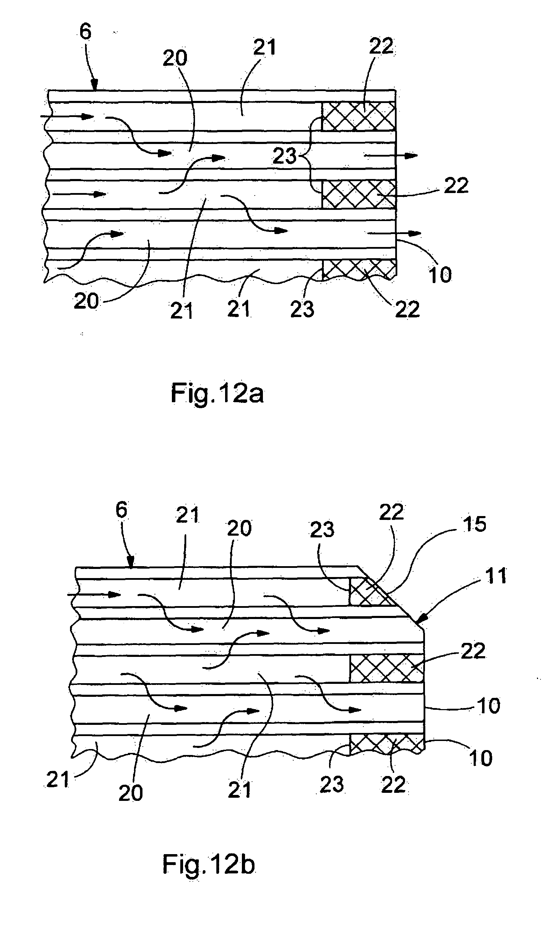

Entsprechend den Fig. 12 bis 14 kann der Keramikkörper 6, wenn er als Partikelfilterelement ausgestaltet ist, eine Vielzahl zueinander und zur Längsrichtung des Keramikkörpers 6 paralleler Kanäle aufweisen. Dabei werden Auslasskanäle 20, die einlassseitig verschlossen und auslassseitig offen sind, von Einlasskanälen 21 unterschieden, die einlassseitig offen und auslassseitig verschlossen sind. Benachbarte Kanäle 20, 21 sind durch gemeinsame Wände voneinander getrennt, die jedoch gasdurchlässig sind. Dementsprechend ergibt sich die in den Figuren durch Pfeile angedeutete Durchströmung des Keramikkörpers 6. Die Einlasskanäle 21 sind auslassseitig mit Stopfen 22 verschlossen, die nachträglich angebracht werden. Denn bei der Herstellung des Keramikkörpers 6 sind zunächst sämtliche Kanäle 20, 21 beidseitig offen.

Fig. 12a zeigt den Keramikkörper 6 vor dem Herstellen der phasenartigen Kontaktzone 11. Im Unterschied dazu ist bei der Darstellung gemäß Fig. 12b die Kontaktzone 11 realisiert, beispielsweise durch Abschleifen oder Abdrehen des außenliegenden Randbereichs der Auslassseite 10. Erkennbar ist, dass auch innerhalb der Kontaktzone 15 Einlasskanäle 21 liegen können. Dabei ist bei der Herstellung der Kontaktzone 11 darauf zu achten, dass die Stopfen 22 der in der Kontaktzone 11 liegenden Einlasskanäle 21 nicht undicht und insbesondere nicht vollständig entfernt werden. Auslassseitig durch die Bearbeitung der Auslassseite 10 geöffnete Einlasskanäle 21 würden zu Fehlströmungen ungefilterter Abgase führen.

Grundsätzlich kann der Keramikkörper 6 gezielt so herstellt werden, dass sich in dem für die Kontaktzone 11 vorgesehenen radial außen liegenden Randbereich ausschließlich Auslasskanäle 20 oder ausschließlich Einlasskanäle 21 befinden.

Bei der in Fig. 12b gezeigten Ausführungsform sind die Stopfen 22 bei den Einlasskanälen 21 identisch ausgestaltet bzw. angeordnet, unabhängig davon, ob der jeweiligen Einlasskanal 21 innerhalb der Kontaktzone 11 liegt oder außerhalb davon angeordnet ist. Die axiale Länge der Stopfen 22 ist begrenzt. Hierdurch ergeben sich konstruktive Einschränkungen für die Ausbildung der Kontaktzone 11, da bei ihrer Herstellung die auslassseitigen Verschlüsse der Einlasskanäle 21 nicht undicht werden dürfen.

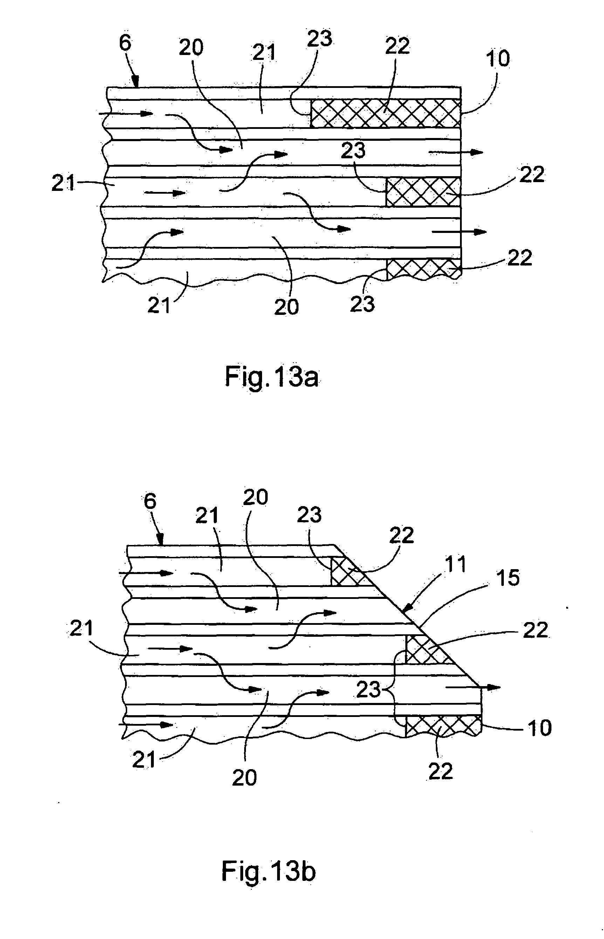

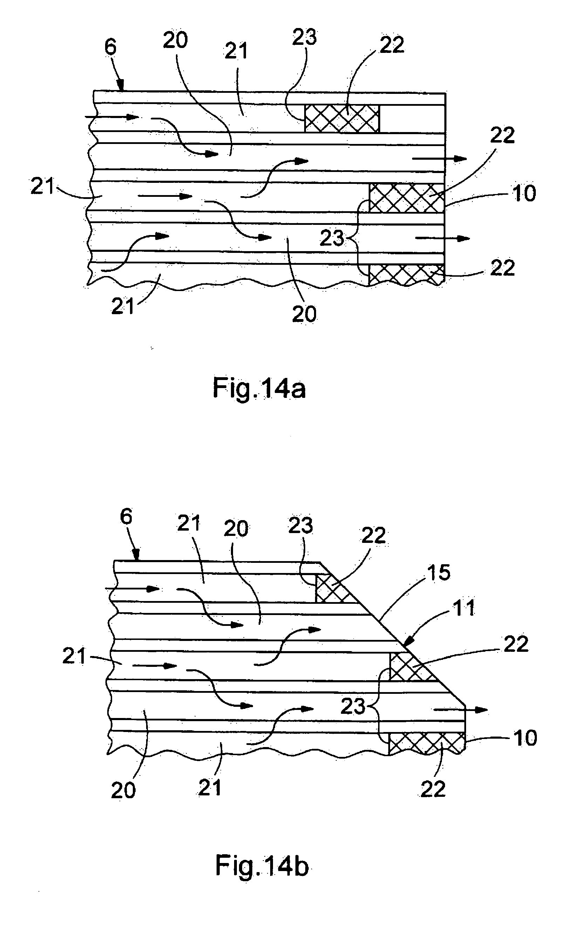

Um die gestalterische Freiheit der Kontaktzone 11 zu verbessern, kann es entsprechend den Fig. 13 und 14 vorgesehen sein, die Stopfen 22 zum auslassseitigen Verschließen derjenigen Einlasskanäle 21, die innerhalb der Kontaktzone 11 liegen, zumindest bei einigen dieser Einlasskanäle 21 so auszugestalten und/oder anzuordnen, dass ihre innen liegenden Enden 23 axial weiter innen angeordnet sind als die innen liegenden Enden 23 derjenigen Stopfen, die zum auslassseitigen Verschließen der anderen, außerhalb der Kontaktzone 11 liegenden Einlasskanäle 21 dienen. Diese Konstellation ist in den Fig. 13b und 14b erkennbar. Erreicht wird diese Konstellation beispielsweise dadurch, dass im unbearbeiteten Zustand diejenigen Stopfen 22, die nach der Bearbeitung die weiter innen liegenden Enden 23 aufweisen sollen, beispielsweise gemäß Fig. 13a eine größere axiale Länge aufweisen als die anderen Stopfen 22, die den außerhalb der Kontaktzone 11 liegenden Einlasskanälen 21 zugeordnet sind. Ebenso ist es entsprechend Fig. 14a möglich, die mit den nach dem Herstellen der Kontaktzone 11 weiter innen liegenden Enden 23 versehenen Stopfen 22 in axialer Richtung gleich groß auszugestalten wie die anderen Stopfen 22. Jedoch werden diese Stopfen 22 beim auslassseitigen Verschließen der Einlasskanäle 21 in axialer Richtung tiefer in die zugehörigen Einlasskanäle 21 hineingeführt als die anderen Stopfen 22.

Grundsätzlich kann der Keramikkörper aus einem herkömmlichen Keramikwerkstoff, wie z.B. aus Oxidkeramik, insbesondere Cordierit, hergestellt werden. Bevorzugt wird jedoch eine Ausführungsform, bei welcher der Keramikkörper 6 aus Siliziumcarbid hergestellt ist. Dieser Werkstoff zeichnet sich durch eine relativ hohe Härte und Stabilität aus, wodurch die Gefahr einer Beschädigung des Keramikkörpers 6 bei einer direkten Kontaktierung zwischen Kontaktzone 11 und Anlagezone 13 zusätzlich reduziert ist.

Entsprechend Fig. 1 ist der Keramikkörper 6 im wiedergegebenen Neuzustand der Abgasbehandlungseinrichtung 1 im Gehäuse 2 an seiner Auslassseite 10 axial freistehend angeordnet. Das heißt, dass im Neuzustand an der Auslassseite 10 keinerlei Kontakt zwischen dem Keramikkörper 6 und dem Gehäuse 2 oder einem anderen Bauteil des Gehäuses 2 besteht.

## Patentansprüche

1. Abgasbehandlungseinrichtung für eine Abgasanlage einer Brennkraftmaschine, insbesondere in einem Kraftfahrzeug,
- mit einem Gehäuse (2), in dem wenigstens ein Keramikkörper (6) zur Abgasbehandlung angeordnet ist,
- wobei der Keramikkörper (6) zumindest an seiner Auslassseite (10) eine bearbeitete Kontaktzone (11) aufweist,
- wobei das Gehäuse (2) an seiner Auslassseite (12) eine dem Keramikkörper (6) zugewandte Anlagezone (13) aufweist,
- wobei Kontaktzone (11) und Anlagezone (13) so aufeinander abgestimmt sind, dass der Keramikkörper (6) im Falle einer auslassseitigen axialen Kontaktierung zwischen Keramikkörper (6) und Gehäuse (2) über die Kontaktzone (11) und die Anlagezone (13) in Umfangsrichtung verteilt oder geschlossen, linienförmig oder flächig am Gehäuse (2) direkt und axial anliegt,
**dadurch gekennzeichnet,**
**dass** die Kontaktzone (11) und die Anlagezone (13) im Axialschnitt jeweils ein Profil (15,16) aufweisen, von denen das eine konkav oder konvex gekrümmt ist und von denen das andere geradlinig und gegenüber einer senkrecht zur Längsrichtung verlaufenden Ebene geneigt ist oder ebenfalls konkav oder konvex gekrümmt ist.

2. Abgasbehandlungseinrichtung nach Anspruch 1, **gekennzeichnet durch** wenigstens eines der folgenden Merkmale:
- die Kontaktzone (11) ist an der Auslassseite (10) des Keramikkörpers (6) in einem radial außen liegenden Bereich ausgebildet;
- die Kontaktzone (11) ist in Umfangsrichtung geschlossen ausgebildet;
- die Anlagezone (13) ist an der Auslassseite (12) des Gehäuses (2) in einem radial außen liegenden Bereich ausgebildet;
- die Anlagezone (13) ist in Umfangsrichtung geschlossen ausgebildet oder **durch** mehrere in Umfangsrichtung verteilt angeordnete und in Umfangsrichtung voneinander beabstandete, separate Anlagebereiche (24) gebildet;
- die Kontaktzone (11) ist im Neuzustand der Abgasbehandlungseinrichtung (1) axial von der Anlagezone (13) beabstandet.

3. Abgasbehandlungseinrichtung nach Anspruch 2,
**dadurch gekennzeichnet,**
**dass** die Anlagebereiche (24) in einer gemeinsamen Ebene oder in einem gemeinsamen Mantel eines gedachten Rotationskörper liegen.

4. Abgasbehandlungseinrichtung nach einem der Ansprüche 1 bis 3,
**gekennzeichnet durch** wenigstens eines der folgenden Merkmale:
- das Kontaktzonenprofil (15) ist in Umfangsrichtung konstant;
- das Kontaktzonenprofil (15) ist kreisbogenförmig gekrümmt;
- das kreisbogenförmig gekrümmte Kontaktzonenprofil (15) besitzt einen Radius (17), dessen Mittelpunkt (19) auf der Längsmittelachse (8) und/oder im Schwerpunkt (S) des Keramikkörpers (6) liegt.

5. Abgasbehandlungseinrichtung nach einem der Ansprüche 1 bis 4,
**gekennzeichnet durch** wenigstens eines der folgenden Merkmale:
- das Anlagezonenprofil (16) ist in Umfangsrichtung konstant;
- das Anlagezonenprofil (16) ist kreisbogenförmig gekrümmt.

6. Abgasbehandlungseinrichtung nach einem der Ansprüche 1 bis 5,
**gekennzeichnet durch** wenigstens eines der folgenden Merkmale:
- der Keramikkörper (6) ist als Partikelfilterelement ausgestaltet, das eine Vielzahl einlassseitig verschlossene Auslasskanäle (20) und auslassseitig verschlossener Einlasskanäle (21) aufweist;
- die Kontaktzone (11) ist so ausgestaltet, dass auch innerhalb der Kontaktzone (11) auslassseitig verschlossene Einlasskanäle (21) liegen;
- der Keramikkörper (6) ist so ausgestaltet, dass in der Kontaktzone (11) nur Auslasskanäle (20) oder nur Einlasskanäle (21) liegen;
- innerhalb der Kontaktzone (11) sind einige oder sämtliche Stopfen (22) zum auslassseitigen Verschließen der Einlasskanäle (21) so ausgestaltet und/oder angeordnet, dass ihre innen liegenden Enden (23) axial weiter innen angeordnet sind als die innen liegenden Enden (23) der Stopfen (22) zum auslassseitigen Verschließen der außerhalb der Kontaktzone (11) liegenden Einlasskanäle (21).

7. Abgasbehandlungseinrichtung nach einem der Ansprüche 1 bis 6,
**gekennzeichnet durch** wenigstens eines der folgenden Merkmale:
- der Keramikkörper (6) ist als Monolith ausgestaltet oder aus mehreren Monolithkörpern zusammengebaut;
- der Keramikkörper (6) weist in seiner Längsrichtung ein konstantes Querschnittsprofil auf;
- der Keramikkörper (6) ist aus Siliziumcarbid hergestellt;
- der Keramikkörper (6) ist als Partikelfilterelement oder als Katalysatorträger ausgestaltet.

8. Abgasbehandlungseinrichtung nach einem der Ansprüche 1 bis 7,
**gekennzeichnet durch** wenigstens eines der folgenden Merkmale:
- der Keramikkörper (6) ist zur Lagefixierung im Gehäuse (2) umfangsmäßig von einer Lagermatte (8) umhüllt;
- der Keramikkörper (6) ist im Neuzustand der Abgasbehandlungseinrichtung (1) im Gehäuse (2) an seiner Auslassseite (10) axial freistehend angeordnet;
- das Gehäuse (2) weist einen Auslasstrichter (5) auf, an dem die Anlagezone (13) ausgebildet ist;
- der Auslasstrichter (5) ist an das Gehäuse (2) angebaut oder mit diesem aus einem Stück hergestellt.

## Claims

1. An exhaust gas treatment device for an exhaust system of an internal combustion engine, in particular in a motor vehicle,
- comprising a housing (2) in which at least one ceramic body (6) for exhaust treatment is provided,
- whereby the ceramic body (6) has a machined contact zone (11) at least on its outlet end (10),
- whereby the housing (2) has a bearing zone (13) facing the ceramic body (6) on its outlet end (12),
- whereby the contact zone (11) and the bearing zone (13) are coordinated with one another so that in the case of an axial contact between the ceramic body (6) and the housing (2) on the outlet end, the ceramic body (6) is directly and axially in contact with the housing (2) over the contact zone (11) and the bearing zone (13), with the contact distributed over the circumferential direction or continuously, in linear or area form,
**characterized in,**
**that** in the axial section each of the contact zone (11) and the bearing zone (13) having a profile (15,16), the one of these profiles (15,16) having a concave or convex curvature and the other of these profiles (15,16) having also a concave or convex curvature or being a straight line inclined with respect to a plane running perpendicular to the longitudinal axis.

2. The exhaust gas treatment device according to Claim 1, **characterized by** at least one of the following features:
- the contact zone (11) is designed in a radially outer area on the outlet end (10) of the ceramic body (6);
- the contact zone (11) is designed to be continuous in the circumferential direction;
- the bearing zone (13) is designed in a radially outer area on the outlet end (12) of the housing (2) ;
- the bearing zone (13) is designed to be continuous in the circumferential direction or is formed by several separate bearing areas (24) that are distributed over the circumferential direction and are spaced a distance apart from one another in the circumferential direction;
- the contact zone (11) in the new state of the exhaust gas treatment device (1) is at a distance axially from the bearing zone (13).

3. The exhaust gas treatment device according to Claim 2,
**characterized in that**,
the bearing areas (24) are situated in a common plane or in a common enclosure of an imaginary rotational body.

4. The exhaust gas treatment device according to any one of Claims 1 through 3,
**characterized by** at least one of the following features:
- the contact zone profile (15) is constant in the circumferential direction;
- the contact zone profile (15) has a curvature in the form of an arc of a circle;
- the contact zone profile (15) having a curvature in the form of an arc of a circle has a radius (17) whose midpoint (19) lies on the longitudinal central axis (8) and/or at the center of gravity (S) of the ceramic body (6).

5. The exhaust gas treatment device according to any one of Claims 1 through 4,
**characterized by** at least one of the following features:
- the bearing zone profile (16) is constant in the circumferential direction;
- the bearing zone profile (16) has a curvature in the form of an arc of a circle.

6. The exhaust gas treatment device according to any one of Claims 1 through 5,
**characterized by** at least one of the following features:
- the ceramic body (6) is designed as a particulate filter element having a plurality of outlet channels (20) sealed at the inlet end and inlet channels (21) sealed at the outlet end;
- the contact zone (11) is designed so that inlet channels (21) sealed at the outlet end are also situated inside the contact zone (11);
- the ceramic body (6) is designed so that only outlet channels (20) or only inlet channels (21) are situated in the contact zone (11);
- some or all of the stoppers (22) for sealing the inlet channels (21) on the outlet end are designed and/or arranged within the contact zone (11) such that their inner ends (23) are arranged farther toward the interior axially than the inner ends (23) of the stoppers (22) for sealing the outlet end of the inlet channels (21) situated outside of the contact zone (11).

7. The exhaust gas treatment device according to any one of Claims 1 through 6,
**characterized by** at least one of the following features:
- the ceramic body (6) is designed as a monolith or is composed of several monolithic bodies;
- the ceramic body (6) has a constant cross-sectional profile in its longitudinal direction;
- the ceramic body (6) is made of silicon carbide;
- the ceramic body (6) is designed as a particulate filter element or as a catalyst support.

8. The exhaust gas treatment device according to any one of Claims 1 through 7,
**characterized by** at least one of the following features:
- the ceramic body (6) is surrounded by a bearing mat (8) on the circumference for securing its position in the housing (2);
- the ceramic body (6) in the new state of the exhaust gas treatment device (1) is arranged in the housing (2) so that it is axially freestanding on its outlet end (10);
- the housing (2) has an outlet cone (5) on which the bearing zone (13) is designed;
- the outlet cone (5) is attached to the housing (2) or is manufactured in one piece together with the housing.

## Revendications

1. Dispositif de traitement des gaz d'échappement d'une installation de gaz d'échappement d'un moteur à combustion interne, notamment dans un véhicule automobile,
- comportant un logement (2), dans lequel au moins un corps céramique (6) est disposé à des fins de traitement des gaz d'échappement,
- moyennant quoi le corps céramique (6) présente au moins sur son côté d'échappement (10) une zone de contact (11) usinée,
- moyennant quoi le logement (2) présente sur son côté d'échappement (12) une zone d'appui (13) tournée vers le corps céramique (6),
- moyennant quoi la zone de contact (11) et la zone d'appui (13) sont harmonisées l'une à l'autre de telle sorte que le corps céramique (6), en cas d'un contact axial du côté d'échappement entre le corps céramique (6) et le logement (2), repose directement et axialement par l'intermédiaire de la zone de contact (11) et de la zone d'appui (13) de manière distribuée ou fermée, linéaire ou à plat sur le logement (2) dans la direction circonférentielle,
**caractérisé en ce que**
la zone de contact (11) et la zone d'appui (13) présentent en coupe axiale respectivement un profil (15,16), desquels un est incurvé de manière convexe ou concave et desquels l'autre est en ligne droite et incliné par rapport à un plan s'étendant perpendiculairement à la direction longitudinale ou est également incurvé de manière concave ou convexe.

2. Dispositif de traitement des gaz d'échappement selon la revendication 1, **caractérisé par** au moins une des caractéristiques suivantes :
- la zone de contact (11) est réalisée sur le côté d'échappement (10) du corps céramique (6) dans une région située radialement à l'extérieur ;
- la zone de contact (11) est réalisée en étant fermée dans la direction circonférentielle ;
- la zone d'appui (13) est réalisée dans une région située radialement à l'extérieur sur le côté d'échappement (12) du logement ;
- la zone d'appui (13) est réalisée en étant fermée dans la direction circonférentielle ou est formée par plusieurs régions d'appui (24) réparties dans la direction circonférentielle, séparées et espacées les unes des autres dans la direction circonférentielle ;
- la zone de contact (11) est en l'état neuf du dispositif de traitement des gaz d'échappement (1) espacée axialement de la zone d'appui (13).

3. Dispositif de traitement des gaz d'échappement selon la revendication 2,
**caractérisé en ce que**
les régions d'appui (24) sont situées dans un plan commun ou dans une gaine commune d'un corps de rotation fictif.

4. Dispositif de traitement des gaz d'échappement selon une des revendications 1 à 3,
**caractérisé par** au moins une des caractéristiques suivantes :
- le profil de zone de contact (15) est constant dans la direction circonférentielle ;
- le profil de zone de contact (15) est incurvé en forme d'arc de cercle ;
- le profil de zone de contact (15) incurvé en forme d'arc de cercle possède un rayon (17), dont le point central (19) repose sur l'axe médian longitudinal (8) et/ou dans le centre de gravité (5) du corps céramique (6).

5. Dispositif de traitement des gaz d'échappement selon une des revendications 1 à 4,
**caractérisé par** au moins une des caractéristiques suivantes :
- le profil de zone d'appui (16) est constant dans la direction circonférentielle ;
- le profil de zone d'appui (16) est incurvé en forme d'arc de cercle.

6. Dispositif de traitement des gaz d'échappement selon une des revendications 1 à 5,
**caractérisé par** au moins une des caractéristiques suivantes :
- le corps céramique (6) est réalisé comme un élément de filtre à particules, qui présente une pluralité de canaux d'échappement (20) fermés du côté d'admission et de canaux d'admission (21) fermés du côté d'échappement ;
- la zone de contact (11) est configurée de telle sorte que les canaux d'admission (21) fermés du côté d'échappement soient aussi situés à l'intérieur de la zone de contact (11) ;
- le corps céramique (6) est configuré de telle sorte que seuls les canaux d'échappement (20) ou seuls les canaux d'admission (21) soient situés dans la zone de contact (11) ;
- à l'intérieur de la zone de contact (11), quelques ou tous les bouchons (22) pour fermer les canaux d'admission (21) du côté d'échappement sont configurés et/ou disposés de telle sorte que leurs extrémités (23) situées à l'intérieur soient disposées plus loin à l'intérieur que les extrémités (23) situées à l'intérieur des bouchons (22) pour fermer du côté d'échappement les canaux d'admission (21) situés à l'extérieur de la zone de contact (11).

7. Dispositif de traitement des gaz d'échappement selon une des revendications 1 à 6,
**caractérisé par** au moins une des caractéristiques suivantes :
- le corps céramique (6) est configuré comme un monolithe ou composé de plusieurs corps monolithiques ;
- le corps céramique (6) présente dans sa direction longitudinale un profil de section transversale constant ;
- le corps céramique (6) est fabriqué en carbure de silicium ;
- le corps céramique (6) est configuré comme un élément de filtre à particules ou un support de catalyseur.

8. Dispositif de traitement des gaz d'échappement selon une des revendications 1 à 7,
**caractérisé par** au moins une des caractéristiques suivantes :
- le corps céramique (6) est enveloppé sur sa circonférence à des fins de fixation en position dans le logement (2) par une natte de montage (8) ;
- le corps céramique (6) est disposé en l'état neuf du dispositif de traitement des gaz d'échappement (1) isolément axialement sur son côté d'échappement (10) dans le logement (2) ;
- le logement (2) présente un cône d'échappement (5), sur lequel est réalisée la zone d'appui (13) ;
- le cône d'échappement (5) est monté sur le logement (2) ou fabriqué en un seul bloc avec celui-ci.
